Europäisches Patentamt

European Patent Office

Office européen des brevets

(19)

(11) Numéro de publication: **0 087 332**

**A1**

(12) # DEMANDE DE BREVET EUROPEEN

(21) Numéro de dépôt: **83400178.6**

(22) Date de dépôt: **26.01.83**

(51) Int. Cl.³: **C 08 F 10/00**
**C 08 F 4/62**

(30) Priorité: **11.02.82 FR 8202258**

(43) Date de publication de la demande:
**31.08.83 Bulletin 83/35**

(84) Etats contractants désignés:
**BE DE FR GB IT NL**

(71) Demandeur: **COMPAGNIE FRANCAISE DE RAFFINAGE**
**Société anonyme dite:**
**5, rue Michel-Ange**
**F-75781 Paris Cedex 16(FR)**

(72) Inventeur: **Hamy, Bernard**
**15, rue Reine Elisabeth**
**F-76310 Sainte Adresse(FR)**

(72) Inventeur: **Plisson, Michel**
**88, Boulevard Clémenceau**
**F-76600 Le Havre(FR)**

(72) Inventeur: **Spitz, Roger**
**44, rue des Fleurs**
**F-69360 Serezin du Rhone(FR)**

(74) Mandataire: **Jolly, Jean-Pierre et al,**
**Cabinet BROT et JOLLY 83, rue d'Amsterdam**
**F-75008 Paris(FR)**

(54) **Procédé de préparation de catalyseurs de polymérisation d'oléfines, catalyseurs préparés par ledit procédé et application desdits catalyseurs.**

(57) L'invention concerne un procédé de préparation d'un catalyseur de polymérisation d'oléfines.

Le procédé consiste:

1) dans une première étape, à faire réagir au moins un composé A d'un élément choisi dans le groupe constitué par les éléments des groupes IVA à VIA de la classification périodique des éléments, ledit élément se trouvant dans ledit composé A à un degré d'oxydation supérieur au degré d'oxydation minimum dudit élement, avec au moins un composé organométallique B d'un élément choisi dans le groupe constitué par les éléments de groupes I à III de la classification périodique des éléments,

2) dans une deuxième étape, à ajouter au produit de la réaction de l'étape 1), au moins un composé B' choisi dans la même famille que celle du composé B, ledit composé B' pouvant être identique ou différent du composé B. Pendant la première étape et/ou après la seconde étape, les produits en présence sont soumis à un traitement par l'hydrogène.

Procédé de préparation de catalyseurs de polymérisation d'oléfines, catalyseurs préparés par ledit procédé et application desdits catalyseurs.

La présente invention concerne un procédé de préparation de catalyseurs de polymérisation d'oléfines. Elle concerne également les catalyseurs préparés par ce procédé et l'application de ces catalyseurs à la polymérisation d'alpha-oléfines.

Il est bien connu d'utiliser pour la polymérisation d'alpha-oléfines, selon un procédé dit à basse pression, des catalyseurs communément appelés catalyseurs Ziegler.

Ces catalyseurs sont des mélanges de composés des éléments des Groupes IV à VI de la classification périodique des éléments, notamment le trichlorure de titane, et de composés organométalliques des Groupes I à III, notamment des composés organo-aluminiques.

De nombreux brevets concernant ces compositions catalytiques et leur application à la polymérisation d'oléfines ont été déposés, l'utilisation d'un catalyseur déterminé permettant d'obtenir une qualité particulière de polyoléfine, convenant à des applications spécifiques.

Ainsi, par exemple, le brevet français n° 1 533 866 décrit un procédé de préparation de polyéthylène, convenant pour la production de corps creux par la technique bien connue d'extrusion-soufflage.

Une des qualités demandées au polyéthylène utilisé pour la production de corps creux, et notamment pour la production de corps creux de moyennes et de grandes dimensions, est d'avoir une polydispersité convenable.

La polydispersité d'une polyoléfine est définie comme le rapport $\frac{\bar{M}w}{\bar{M}n}$ , $\bar{M}w$ désignant la masse moléculaire moyenne en poids et $\bar{M}n$ désignant la masse moléculaire moyenne en nombre.

Ainsi, plus la polydispersité sera grande et plus la gamme des masses moléculaires des différentes molécules de polyoléfine sera importante.

Pour l'extrusion-soufflage de corps creux, il est nécessaire que le polyéthylène contienne :

- d'une part, des molécules ayant une masse moléculaire élevée, de façon à assurer la rigidité du corps creux,

- d'autre part, des molécules ayant une masse moléculaire faible, de façon à faciliter le travail à chaud du polyéthylène, lors de l'extrusion-soufflage.

On a donc cherché à mettre au point des procédés de polymérisation permettant d'obtenir des polyoléfines de polydispersité importante. On utilise ainsi, par exemple, le procédé de polymérisation dit en cascade, procédé en plusieurs étapes, où les conditions opératoires (température, pression, temps de séjour et concentration des différents réactifs et catalyseurs) varient d'une étape à l'autre et permettent d'obtenir, à chaque étape, une polyoléfine de masse moléculaire différente de celles obtenues dans les autres étapes. La polyoléfine finale obtenue peut ainsi avoir la polydispersité désirée. Un tel procédé, décrit par exemple dans le brevet français n° 1 418 396, a comme inconvénient de comporter plusieurs étapes et donc de nécessiter plusieurs réacteurs fonctionnant avec des conditions opératoires différentes et non indépendantes, d'où, naturellement, une grande difficulté de conduite de l'unité de fabrication de la polyoléfine et un coût de production élevé.

Pour remédier à cet inconvénient, la Demanderesse a mis au point un catalyseur permettant d'obtenir une polyoléfine de polydispersité contrôlée et, en particulier, importante, sans cependant nécessiter la mise en oeuvre d'un procédé de polymérisation en plusieurs étapes.

Le but de la présente invention est donc l'obtention de polyoléfines de polydispersité contrôlée.

A cet effet, l'invention a pour objet un procédé de préparation d'un catalyseur de polymérisation d'oléfines, ce procédé consistant :

1.- Dans une première étape, à faire réagir :

- au moins un composé A d'un élément choisi dans le groupe constitué par les éléments des groupes IV A à VI A de la classification périodique des éléments, ledit élément se trouvant dans ledit composé A à un degré d'oxydation supérieur au degré minimum d'oxydation dudit élément,

avec

- au moins un composé organométallique B d'un élément choisi dans le groupe constitué par les éléments des groupes I à III de la classification périodique des éléments,

2.- Dans une deuxième étape, à ajouter au produit de la réaction de l'étape 1), au moins un composé B' choisi dans la même famille que celle du composé B, ledit composé B' pouvant être identique ou différent du composé B,

ledit procédé étant caractérisé en ce que, pendant la première étape et/ou après la seconde étape, les produits en présence sont soumis à un traitement par l'hydrogène.

Un deuxième et un troisième objets de l'invention sont constitués par des catalyseurs préparés par le procédé selon l'invention et leur application à la polymérisation d'alpha-oléfines.

Dans le procédé selon l'invention, le composé A peut être notamment un halogénure du titane ou du vanadium. Il peut s'agir, en particulier, d'un composé du titane tétravalent, tel que le tétrachlorure de titane, ou un alcoxyhalogénure de titane de formule générale $Ti\ (OR)_{4-n}\ X_n$ , où X est un élément halogène, $\underline{n}$ étant tel que $1 \leqslant n \leqslant 4$, et où R représente un radical hydrocarboné ayant de 2 à 8 atomes de carbone.

Le composé B peut être notamment un composé organoaluminique ou organozincique, chloré ou non, par exemple l'isoprénylaluminium, le triéthylaluminium, le triisobutylaluminium, le trioctylaluminium ou le diéthyl-zinc.

L'étape 1) de réaction du composé A et du composé B peut être effectuée dans un agent solvant ou dispersant inerte vis-à-vis des corps en présence, comme ceux utilisés généralement dans les procédés de polymérisation d'oléfines, à l'aide de catalyseurs Ziegler, par exemple les hydrocarbures aliphatiques, cycliques, saturés ou aromatiques, notamment l'hexane ou l'heptane, ou des mélanges de tels hydrocarbures.

Les composés A et B peuvent être également non dilués.

L'eau et l'oxygène, en particulier, doivent être éliminés ou introduits d'une manière contrôlée, dans les agents inertes utilisés comme solvant ou dispersant, ainsi que dans l'atmosphère du réacteur.

La réaction peut être effectuée à une température comprise entre -80°C et 100°C et, de préférence, entre -20°C et 20°C.

La pression peut être comprise entre la tension de vapeur du solvant à la température considérée et $18.10^6$ Pascals absolus, et, de préférence, entre $0,2.10^5$ Pascals et $30.10^5$ Pascals absolus.

La durée de l'étape 1) peut être comprise entre 1 minute et 48 heures, bien que des durées inférieures ou supérieures puissent être envisagées.

La deuxième étape du procédé consiste à ajouter au produit de la réaction des composés A et B, obtenu à l'issue de l'étape 1), un composé B', qui peut être identique ou différent de B, mais qui fait partie de la famille de composés organométalliques telle que définie ci-dessus.

Le traitement des produits en présence par l'hydrogène, qui est caractéristique de l'invention, peut être effectué pendant la première étape et, donc, dans les conditions définies précédemment.

Lorsque le traitement par l'hydrogène est effectué après l'addition du composé B', le traitement peut être effectué dans un agent inerte, tel que ceux pouvant être employés dans la première étape.

Le produit de la réaction des composés A et B et le composé B' peuvent être également purs, c'est-à-dire non dilués.

Les conditions opératoires, lors de ce traitement, peuvent être les suivantes :

- température comprise entre -20°C et 150°C, de préférence entre 20°C et 100°C,

- pression comprise entre la tension de vapeur du solvant à la température considérée et $18.10^6$ Pascals

absolus, et, de préférence, entre $0,2.10^5$ Pascals et $30.10^5$ Pascals absolus.

- durée, de préférence, comprise entre 1 minute et 24 heures, bien que des durées inférieures ou supérieures puissent être envisagées.

Le traitement par l'hydrogène des produits en présence peut être effectué pendant la première étape et après la deuxième étape du procédé.

Il est possible d'ajouter au catalyseur obtenu à l'issue du procédé de préparation, à titre de co-catalyseur, un composé B", qui peut être identique ou différent de B et/ou de B', mais qui fait partie de la famille des composés organométalliques définie précédemment.

Il est possible, également, dans le procédé selon l'invention, d'effectuer, après l'étape 1) ou après le traitement à l'hydrogène, lorsque celui-ci est effectué après l'étape 2), un lavage du solide obtenu à l'aide d'un agent inerte, pour enlever l'excès des composés B ou B' et de les remplacer par un composé B", quand B ou B' ne peuvent convenir comme co-catalyseur.

Les catalyseurs préparés par le procédé selon l'invention peuvent être utilisés pour l'homopolymérisation ou la copolymérisation d'alpha-oléfines. Ils s'appliquent particulièrement bien à l'homopolymérisation de l'éthylène ou à sa copolymérisation avec d'autres alpha-oléfines comme le propylène ou le butène-1, par exemple.

La polymérisation, ou la copolymérisation, peut être réalisée selon les techniques connues de polymérisation, en continu ou en discontinu. La réaction peut être effectuée en phase gazeuse, en solution ou en suspension. Dans les polymérisations en solution ou en suspension, on peut utiliser, comme solvant ou agent de dispersion, les liquides inertes vis-à-vis des réactifs couramment utilisés dans le procédé de polymérisation ou de copolymérisation à basse pression à l'aide des catalyseurs Ziegler décrits précédemment. Comme agent de dispersion ou comme solvant, on peut utiliser les monomères eux-mêmes, maintenus à l'état liquide par leur tension de vapeur saturante à la température à laquelle est effectuée la polymérisation.

La polymérisation peut être effectuée, en présence ou en l'absence d'hydrogène, à une température comprise entre 20 et 250°C, de préférence entre 60 et 140°C, et à une pression qui peut aller jusqu'à $60.10^5$ Pascals, de préférence comprise entre $5.10^5$ et $35.10^5$ Pascals. Des pressions ou des températures plus hautes ou plus basses peuvent être envisagées.

L'exemple qui suit concerne la préparation de catalyseurs de polymérisation, conformément à un procédé connu et au procédé selon l'invention, et la polymérisation de l'éthylène à l'aide des catalyseurs ainsi préparés. Cet exemple n'a naturellement pas de caractère limitatif.

EXEMPLE

I - ESSAIS T, A et B

Ces essais concernent la préparation d'un catalyseur témoin CT, dont la préparation fait partie de l'état connu de la technique, et de catalyseurs CA et CB, préparés par le procédé selon l'invention.

Ils concernent également la polymérisation de l'éthylène à l'aide desdits catalyseurs.

On dispose du produit de la réaction, sous atmosphère inerte à 0°C, du tétrachlorure de titane et d'un composé organo-aluminique, en l'occurence de l'isoprénylaluminium (voir, par exemple, l'ouvrage de J. BOOR, Jr "Ziegler-Natta Catalysts and Polymerizations", page 110). Ce produit sera appelé ci-après produit AB1.

ESSAI T.

Préparation du catalyseur témoin CT.

Dans un réacteur thermostaté, d'une capacité d'un litre, équipé d'une alimentation en hydrogène et d'une alimentation en éthylène, on introduit 500 $cm^3$ d'hexane sec contenant 0,08 millimole du produit AB1 préparé comme indiqué précédemment et 1,25 millimole d'isoprénylaluminium. Le rapport $\frac{aluminium}{titane}$ est donc voisin de 15. Le réacteur est maintenu à 20°C pendant cette introduction, le réacteur étant balayé par un courant d'azote.

Polymérisation de l'éthylène avec le catalyseur CT.

Le réacteur est isolé. On introduit alors dans le réacteur à 20°C, tout d'abord de l'hydrogène, en quantité telle que la pression à l'intérieur du réacteur soit de 3,6.10$^5$ Pascals absolus, puis de l'éthylène, de telle façon que la pression soit de de 11.10$^5$ Pascals absolus, lorsque la température du réacteur est portée à 80°C. L'éthylène polymérise et on continue à introduire de l'éthylène dans le réacteur, de façon à maintenir la pression à l'intérieur du réacteur à 11.10$^5$ Pascals absolus pendant la durée de la polymérisation, qui est fixée à 90 minutes.

La polymérisation est arrêtée en interrompant l'introduction d'éthylène dans le réacteur, en abaissant rapidement la température à 20°C et en introduisant dans le réacteur du méthanol contenant de l'acide chlorhydrique.

Les résultats de la polymérisation sont les suivants :

- masse de polyéthylène obtenue : 127 g ,
- masse volumique en g/cm$^3$ : 0,960 ,
- indice de fusion selon norme ASTM D 1238. Charge 21,6 kg. : 26,1 ,
- masse moléculaire moyenne en poids $\overline{M}_w$* : 138.000 ,
- masse moléculaire moyenne en nombre $\overline{M}_n$* : 17.200 ,
- polydispersité $\dfrac{\overline{M}_w}{\overline{M}_n}$ : 8,0.

\* = déterminées par chromatographie par perméation sur gel.

ESSAI A

Préparation du catalyseur CA.

On peut se reporter à la préparation précédente. On n'indiquera ici que les différences avec cette préparation.

On introduit dans le réacteur 100 cm$^3$ d'hexane contenant 0,09 millimole du produit AB1 et 0,26 millimole d'isoprénylaluminium, le rapport $\dfrac{\text{aluminium}}{\text{titane}}$ étant donc voisin de 3.

On porte la pression dans le réacteur à 3,6.10$^5$ Pascals absolus, par introduction d'hydrogène à 20°C. Le réacteur est ensuite porté à la température de 80°C, pendant une heure.

Polymérisation de l'éthylène avec le catalyseur CA.

On ajoute ensuite 400 cm$^3$ d'hexane et on porte la pression du réacteur à $11.10^5$ Pascals absolus par introduction d'éthylène.

La polymérisation est ensuite effectuée dans les mêmes conditions que dans l'essai précédent.

Les résultats de la polymérisation sont les suivants :

- masse de polyéthylène obtenue : 72 g,
- masse volumique du polyéthylène en g/cm$^3$ : 0,954 ,
- indice de fusion (selon norme ASTM D 1238- charge 21,6 kg) : 4,9,
- masse moléculaire moyenne en poids $\overline{M}w$ : 193.000,
- masse moléculaire moyenne en nombre $\overline{M}n$ : 15.000,
- polydispersité $\frac{\overline{M}w}{\overline{M}n}$ : 13.

ESSAI B

Préparation du catalyseur CB.

On peut se reporter à la préparation de CA, seules les différences avec cette préparation étant rapportées ci-après.

On introduit dans le réacteur 500 cm$^3$ d'hexane contenant 0,08 millimole du produit AB1 et 1,24 millimole d'isoprénylaluminium, le rapport $\frac{aluminium}{titane}$ étant donc voisin de 15.

On porte la pression dans le réacteur à $3,6.10^5$ Pascals absolus, par introduction d'hydrogène à 20°C, le réacteur étant ensuite porté à la température de 80°C pendant 1 heure.

Polymérisation de l'éthylène avec le catalyseur CB.

La polymérisation est ensuite effectuée dans les mêmes conditions que dans les essais précédents.

Les résultats de la polymérisation sont les suivants :

- masse de polyéthylène obtenue : 151 g,
- masse volumique de polyéthylène en g/cm$^3$ : 0,951,
- indice de fusion (norme ASTM D 1238- charge 21,6 kg) : 1,8,
- masse moléculaire moyenne en poids $\overline{M}w$ : 224.000,

— masse moléculaire moyenne en nombre $\overline{M}_n$ : 23.000,

— polydispersité $\dfrac{\overline{M}_w}{\overline{M}_n}$ : 10,0.

II - ESSAIS C.

On dispose du produit obtenu par réaction du tétrachlorure de titane et de l'isoprénylaluminium, mais, contrairement à celui utilisé dans les essais T, A et B, la réaction, au lieu d'être effectuée sous atmosphère inerte, est effectuée en présence d'hydrogène à 0°C. Ce produit sera appelé ci-après produit AB2.

ESSAI C1.

Les conditions de préparation du catalyseur CC1 et de polymérisation de l'éthylène à l'aide de ce catalyseur sont identiques à celles de l'essai T, à cette différence près, comme indiqué ci-dessus, que la réaction du tétrachlorure de titane et de l'isoprénylaluminium est effectuée en présence d'hydrogène.

Les résultats de la polymérisation sont les suivants :

— masse de polyéthylène obtenue : 98 g,

— masse volumique du polyéthylène en g/cm$^3$ : 0,961,

— indice de fusion (selon norme ASTM D 1238-charge 21,6 kg) : 41,8,

— masse moléculaire moyenne en poids $\overline{M}_w$ : 126.000,

— masse moléculaire moyenne en nombre $\overline{M}_n$ : 13.100,

— polydispersité $\dfrac{\overline{M}_w}{\overline{M}_n}$ : 9,6.

ESSAI C2.

Préparation du catalyseur CC2.

On introduit dans le réacteur 450 cm$^3$ d'hexane contenant 0,08 millimole du produit AB2 obtenu, comme pour l'essai C1, par réaction du tétrachlorure de titane et d'isoprénylaluminium en présence d'hydrogène, et 0,3 millimole d'isoprénylaluminium, le rapport $\dfrac{\text{aluminium}}{\text{titane}}$ étant donc de 3,75.

On porte la pression dans le réacteur à $3,6.10^5$ Pascals absolus, par introduction d'hydrogène à 20°C, le réacteur étant ensuite porté à la température de 80°C,

pendant 1 heure.

Polymérisation de l'éthylène à l'aide du catalyseur CC2.

On introduit 0,72 millimole d'isoprénylaluminium dans 50 cm$^3$ d'hexane et la polymérisation est effectuée dans les mêmes conditions que dans les essais précédents, avec un rapport $\frac{aluminium}{titane}$ de 12,7.

Les résultats de la polymérisation sont les suivants :

- masse de polyéthylène obtenue : 61 g,
- masse volumique du polyéthylène en g/cm$^3$ : 0,960,
- indice de fusion (selon norme ASTM D 1238- charge 21,6 kg) : 5,7,
- masse moléculaire moyenne en poids $\overline{M}w$ : 223.000,
- masse moléculaire moyenne en nombre $\overline{M}n$ : 15.560,
- polydispersité $\frac{\overline{M}w}{\overline{M}n}$ : 14,3.

III - ESSAI D.

Préparation du catalyseur CD.

On introduit dans le réacteur 450 cm$^3$ d'hexane contenant 0,08 millimole du produit AB1 obtenu comme pour les Essais T, A et B, par réaction du tétrachlorure de titane et d'isoprénylaluminium en atmosphère inerte et 0,3 millimole d'isoprénylaluminium, le rapport $\frac{aluminium}{titane}$ étant donc de 3,75.

On porte la pression dans le réacteur à 3,6.10$^5$ Pascals absolus par introduction d'hydrogène à 20°C, le réacteur étant ensuite porté à la température de 80°C pendant 1 heure.

Polymérisation de l'éthylène à l'aide du catalyseur CD.

On introduit alors 0,72 millimole d'isoprénylaluminium dans 50 cm$^3$ d'hexane et la polymérisation est effectuée dans les mêmes conditions que dans les essais précédents, avec un rapport $\frac{aluminium}{titane}$ de 12,7.

Les résultats de la polymérisation sont les suivants :

- masse de polyéthylène obtenue : 152 g,
- masse volumique du polyéthylène en g/cm$^3$ : 0,958,
- indice de fusion (selon norme ASTM D 1238 charge 21,6 kg) : 9,

- masse moléculaire moyenne en poids $\overline{M}w$ : 185.000,
- masse moléculaire moyenne en nombre $\overline{M}n$ : 15.160,
- polydispersité $\dfrac{\overline{M}w}{\overline{M}n}$ : 12,2 -

IV - ESSAI E.

Préparation du catalyseur CE.

Elle est identique à celle du catalyseur CA et on opère avec les mêmes quantités de composés que dans l'essai A.

Polymérisation de l'éthylène à l'aide du catalyseur CE.

On introduit dans le réacteur 400 cm$^3$ d'hexane contenant du triisobutylaluminium, en quantité telle que le rapport $\dfrac{aluminium}{titane}$ soit de 15.

On effectue ensuite la polymérisation dans les mêmes conditions que dans les essais précédents et on obtient les résultats suivants :

- masse de polyéthylène obtenue : 115 g,
- masse volumique du polyéthylène en g/cm$^3$ : 0,956,
- indice de fusion (selon norme ASTM D 1238-charge 21,6 kg) : 3,7,
- masse moléculaire moyenne en poids $\overline{M}w$ : 196.000,
- masse moléculaire moyenne en nombre $\overline{M}n$ : 20.000,
- polydispersité $\dfrac{\overline{M}w}{\overline{M}n}$ : 9,8.

V - ESSAI F.

Préparation du catalyseur CF.

On introduit dans le réacteur 500 cm$^3$ d'hexane contenant 1 millimole de triisobutylaluminium et 0,08 millimole du produit AB1, le rapport $\dfrac{aluminium}{titane}$ étant donc de 15.

On porte la pression dans le réacteur à 3,6.10$^5$ Pascals absolus, par introduction d'hydrogène à 20°C, le réacteur étant ensuite porté à la température de 60°C, pendant 15 minutes.

Polymérisation de l'éthylène à l'aide du catalyseur CF.

- masse de polyéthylène obtenue : 69 g,
- masse volumique du polyéthylène en g/cm$^3$ : 0,954,
- indice de fusion (selon norme ASTM D 1238-charge 21,6 kg) : 1,5,

- masse moléculaire moyenne en poids $\overline{M}w$ : 239000,
- masse moléculaire moyenne en nombre $\overline{M}n$ : 18900,
- polydispersité $\dfrac{\overline{M}w}{\overline{M}n}$ : 12,6.

TABLEAU

| Essai | Catalyseur | Rapport Al/Ti lors de la polymérisa-tion. | Résultats | | | | Remarques sur la prépara-tion d'un catalyseur. |
|---|---|---|---|---|---|---|---|
| | | | Rendement en g | $\overline{M}_w$ | $\overline{M}_n$ | Polydispersité | |
| T | CT | 15 | 127 | 138.000 | 17.200 | 8,0 | Pas de traitement à l'hydrogène |
| A | CA | 3 | 72 | 193.000 | 15.000 | 13,0 | Traitement à l'hydrogène après l'étape 2) |
| B | CB | 15 | 151 | 224.000 | 23.000 | 10,0 | – id – |
| C1 | CC1 | 15 | 98 | 126.000 | 13.100 | 9,6 | Traitement à l'hydrogène au cours de l'étape 1). |
| C2 | CC2 | 12,7 | .61 | 223.000 | 15.560 | 14,3 | Traitement à l'hydrogène au cours de l'étape 1)et après l'étape 2). |
| D | CD | 12,7 | 152 | 185.000 | 15.160 | 12,2 | Traitement à l'hydrogène après l'étape 2). |
| E | CE | 15 | 115 | 196.000 | 20.000 | 9,8 | Traitement à l'hydrogène après l'étape 2). |
| F | CF | 15 | 69 | 239.000 | 18.900 | 12,6 | Traitement à l'hydrogène après l'étape 2). |

On peut constater, d'après ce Tableau, que :

1.- Le traitement à l'hydrogène permet d'obtenir du polyéthylène de polydispersité supérieure à celui obtenu lors de l'essai témoin T, (pour CB, $\frac{Mw}{Mn}$ = 10, pour CC1, $\frac{Mw}{Mn}$ = 9,6 et, pour CT, $\frac{Mw}{Mn}$ = 8) dans les mêmes conditions de polymérisation (rapport $\frac{aluminium}{titane}$ = 15).

2.- La combinaison d'un traitement à l'hydrogène, au cours de l'étape 1, et d'un traitement, après l'étape 2, apporte une amélioration supplémentaire (pour CC2, $\frac{Mw}{Mn}$ = 14,3 et, pour CD, $\frac{Mw}{Mn}$ = 12,2) et ce dans les mêmes conditions de polymérisation (rapport $\frac{aluminium}{titane}$ = 12,7).

## VI ESSAIS T2 et G
### ESSAI T2
#### Préparation du catalyseur témoin CT2

Dans un réacteur thermostaté, d'une capacité d'un litre, équipé d'une alimentation en hydrogène et d'une alimentation en éthylène, on introduit 500 millilitres d'hexane sec contenant 0,04 millimole du produit AG1 préparé comme indiqué précédemment et 1,25 millimole d'isoprénylaluminium. Le rapport $\frac{aluminium}{titane}$ est donc voisin de 30. Le réacteur est maintenu à 20°C pendant cette introduction, le réacteur étant balangé par un courant d'azote.

#### Copolymérisation de l'éthylène et du butène 1 à l'aide de la composition catalytique CT2.

On isole le réacteur. On introduit alors dans le réacteur à 20°C, de l'hydrogène en quantité telle que la pression à l'intérieur du réacteur soit de $3,6.10^5$ pascals absolus. On introduit dans le réacteur de l'éthylène et du butène-1 en quantités telles que les pourcentages molaires de l'éthylène et du butène-1, dans la phase gazeuse, l'un par rapport à l'autre, soient respectivement de 94,5 et 5,5 et que la pression soit de $11.10^5$ pascals absolus, lorsque la température du réacteur est portée à 80°C. L'éthylène et le butène-1 copolymérisent et on continue à introduire de l'éthylène et du butène-1 dans le réacteur, de façon à maintenir la pression à l'intérieur du réacteur à $11.10^5$ bars absolus et la composition de la phase gazeuse constante pendant la durée de la copolymérisation qui est fixée à 90 minutes.

La copolymérisation est arrêtée en interromptant l'introduction d'éthylène et de butène-1 dans le réacteur, en abaissant rapidement la température à 20°C et en introduisant dans le réacteur du méthanol contenant de l'acide chlorhydrique.

Les résultats de la copolymérisation sont les suivants :

- masse de copolymère obtenue :                    195,9 g
- productivité                                68168 $g_{PE}/g_{Ti}/h$
- % en poids de cires obtenues :                    0,91 %
- masse volumique en $g/cm^3$ :                     0,933
- indice de fusion charge 5 kg $I_5$ :               19,2
- -     -     -     charge 21,6 kg $I_{21,6}$ :      166,7
- polydispersité    $\dfrac{I_{21,6}}{I_5}$          8,7

ESSAI G

### Préparation du catalyseur CG

On peut se reporter à la préparation précédente. On n'indiquera ici que les différences avec cette préparation. Après la mise en contact du produit $AB_1$ et de l'isoprénylaluminium on porte la pression dans le réacteur à $3,6. 10^5$ pascals absolus, par introduction d'hydrogène à 20°C. Le réacteur est ensuite porté à la température de 80°C pendant une heure.

### Copolymérisation de l'éthylène et du butène-1 à l'aide de la composition catalytique CG.

La copolymérisation est effectuée de la même façon que pour l'essai T2 mais sa durée n'est que d'une heure et les pourcentages molaires de l'éthylène et du butène-1 sont respectivement de 96 et 4.

Les résultats de la copolymérisation sont les suivants :

- masse de copolymère obtenue :        98,5 g
- productivité            :       51387 $g_{PE}/g_{Ti}/h$
- % en poids de cires obtenues :       0,56 %
- masse volumique en $g/cm^3$    :       0,931
- indice de fusion charge 5 kg $I_5$ :      0,9
-    -    -    - charge 21,6 kg $I_{21,6}$ :    12,2
- polydispersité $\dfrac{I_{21,6}}{I_5}$        13,5

On voit qu'avec les catalyseurs selon l'invention, on obtient un copolymère de masse volumique plus faible en utilisant moins de butène-1.

REVENDICATIONS

1.- Procédé de préparation d'un catalyseur de polymérisation d'oléfines consistant :

1) dans une première étape, à faire réagir :

- au moins un composé A d'un élément choisi dans le groupe constitué par les éléments des groupes IVA à VIA de la classification périodique des éléments, ledit élément se trouvant dans ledit composé A à un degré d'oxydation supérieur au degré d'oxydation minimum dudit élément, avec

- au moins un composé organométallique B d'un élément choisi dans le groupe constitué par les éléments des groupes I à III de la classification périodique des éléments,

2) dans une deuxième étape, à ajouter au produit de la réaction de l'étape 1), au moins un composé B' choisi dans la même famille que celle du composé B, ledit composé B' pouvant être identique ou différent du composé B,

ledit procédé étant caractérisé en ce que, pendant la première étape et/ou après la seconde étape, les produits en présence sont soumis à un traitement par l'hydrogène.

2.- Procédé selon la revendication 1, caractérisé en ce que le composé A est choisi dans le groupe constitué par les halogénures de titane et de vanadium.

3.- Procédé selon l'une des revendications 1 et 2, caractérisé en ce que le composé A est le tétrachlorure de titane.

4.- Procédé selon l'une des revendications 1 à 3, caractérisé en ce que le composé B est choisi dans le groupe constitué par l'isoprénylaluminium, le triéthylaluminium, le triisobutylaluminium, le trioctylaluminium et le diéthylzinc.

5.- Procédé selon l'une des revendications 1 à 4, caractérisé en ce que le composé B est l'isoprénylaluminium.

6.- Les catalyseurs préparés par un procédé selon l'une des revendications 1 à 5.

7.- Application des catalyseurs selon la revendication 6 à la polymérisation d'oléfines.

8.- Application des catalyseurs selon la revendication 6 à la polymérisation de l'éthylène, caractérisée en ce que le polyéthylène obtenu a une polydispersité supérieure à 8.

9.- Application selon la revendication 8, caractérisée en ce que, conjointement avec le catalyseur, on utilise un co-catalyseur, qui peut être un composé B" choisi dans la même famille que les composés B et B' et qui peut être identique ou différent des composés B et.ou B'.

## DOCUMENTS CONSIDERES COMME PERTINENTS

| Catégorie | Citation du document avec indication en cas de besoin des parties pertinentes | Revendication concernée | CLASSEMENT DE LA DEMANDE (Int Cl ³) |
|---|---|---|---|
| X | US-A-3 256 259 (F.M. SEGER et al.) <br> * Revendications 1-6; colonne 1, lignes 57-65; colonne 2, ligne 52 - colonne 3, ligne 38, lignes 43-67; colonne 4, lignes 1-26; colonne 5, lignes 37-56 * | 1-4,6-7 | C 08 F 10/00 <br> C 08 F 4/62 |
| Y | | 4,5 | |
| | --- | | |
| D,Y | FR-A-1 533 866 (HOECHST) <br> * Résumé, points 1,2; page 2, colonne de droite, lignes 31-33; page 3, colonne de droite, lignes 15-31; exemple 1d * | 5-7 | |
| | --- | | |
| Y | FR-A-1 291 794 (E.I. DU PONT DE NEMOURS) <br> * Résumé, points 2,III et IV; page 4, colonne de gauche, lignes 31-52 * | 5-7 | **DOMAINES TECHNIQUES RECHERCHES (Int Cl ³)** <br><br> C 08 F |
| | ----- | | |

Le present rapport de recherche a été établi pour toutes les revendications

| Lieu de la recherche <br> LA HAYE | Date d achevement de la recherche <br> 26-05-1983 | Examinateur <br> WEBER H. |
|---|---|---|